# EUROPÄISCHE PATENTANMELDUNG

(11) **EP 3 081 622 A1**
(43) Veröffentlichungstag der Anmeldung: **19.10.2016**
(21) Anmeldenummer: 15001121.1
(22) Anmeldetag: 15.04.2015
(51) Int. Cl.: C10B 49/18, C10B 53/02

(54) **VERFAHREN UND ANLAGE ZUR VERBESSERTEN HERSTELLUNG VON PYROLYSETEER**

(71) Anmelder: L'AIR LIQUIDE, Société Anonyme pour l'Etude et l'Exploitation des Procédés Georges Claude, 75007 Paris (FR)
(72) Erfinder: Müller-Hagedorn, Matthias, 76199 Karlsruhe (DE); Demir, Gamze, 60594 Frankfurt a. M. (DE); Bachmann, Holger, 64331 Weiterstadt (DE)
(74) Vertreter: Dropsch, Holger

(57) **Zusammenfassung**

Es werden ein Verfahren und eine Anlage zur Schnellpyrolyse von Biomasse, insbesondere von Lignocellulose enthaltender Biomasse angegeben, bei denen die bereitgestellte Biomasse mit einem festen Wärmeträger unter Pyrolysebedingungen umgesetzt wird. Bei der nachfolgenden Auftrennung der Pyrolyseprodukte wird ein flüssiges Produkt, der Pyrolyseteer, erhalten. Erfindungsgemäß wird mindestens ein Teil des zur Aufheizung des Wärmeträgers genutzten Rauchgases oder des als weiteres Produkt erhaltenen Pyrolysegases oder Mischungen beider Gase zum Pyrolysereaktor oder in den heißen Bereich der Produktaufarbeitung zurückgeführt.

## Beschreibung

### Gebiet der Erfindung

Die Erfindung betrifft ein Verfahren zur Schnellpyrolyse von Biomasse, insbesondere von Lignocellulose enthaltender Biomasse, also cellulose- und ligninhaltiger Stoffe wie beispielsweise Holz, Stroh, Heu, aber auch Papier, wobei gasförmige und feste Pyrolyseprodukte sowie ein flüssiges Pyrolyseprodukt erhalten wird, das synonym als Pyrolyseteer, Pyrolyseöl, Bioteer oder Bioöl bezeichnet wird. Die Erfindung betrifft auch eine Anlage zur Durchführung der Schnellpyrolyse. Das Verfahren bzw. die Anlage gemäß der Erfindung sind dabei so ausgestaltet, dass eine besonders hohe Ausbeute hinsichtlich des Pyrolyseteers erhalten wird.

### Stand der Technik

Die Schnellpyrolyse (synonym Flash-Pyrolyse, Blitzpyrolyse) wird für die Umsetzung von kohlenstoffhaltigen Einsatzstoffen wie Biomasse in flüssige Pyrolyseprodukte (Pyrolyseöl oder Pyrolyseteer) sowie festen Pyrolysekoks und Pyrolysegas eingesetzt, wobei die erhaltenen Pyrolyseprodukte in Bezug auf die eingesetzte Biomasse energetisch verdichtet sind. Bei der Schnellpyrolyse von Biomasse als Einsatzstoff erfolgt die Umsetzung zu den Pyrolyseprodukten unter weitgehendem Sauerstoffausschluss innerhalb weniger Sekunden bei Temperaturen von ca. 400 bis 600 °C, typischerweise um 500 °C, wobei flüssige (Pyrolyseöl), feste (Biokoks) und ein Restanteil gas- oder dampfförmige Pyrolyseprodukte erhalten werden.

Je nach Betriebsbedingungen und eingesetzter Biomasse entstehen bei der Schnellpyrolyse zu 40 bis 70 Gew.-% flüssiges Pyrolyseöl und zu 15 bis 40 % Pyrolysekoks. Den Rest bildet ein nicht kondensierbares Pyrolysegas, dessen Verbrennungswärme zum Aufheizen oder zur Trocknung genutzt werden kann. Die erhaltenen Pyrolyseprodukte können als energieverdichtete Brennstoffe oder als Einsatz für nachfolgende chemische Umsetzungen oder Synthesen dienen. So können feste und flüssige Pyrolyseprodukte in einem Vergasungsreaktor mit einem Vergasungsmittel wie Sauerstoff und/oder Dampf zu einem Wasserstoff und Kohlenoxide enthaltenden Synthesegas umgesetzt werden.

Der Wärmebedarf für die Schnellpyrolyse wird in der Regel durch Verbrennen von Pyrolysekoks oder Pyrolysegasen oder einer Kombination von beiden gedeckt. Zusätzlich kann der Wärmeeintrag durch Verbrennen von Hilfsbrennstoffen, beispielsweise Erdgas, erfolgen. Häufig wird dabei ein im Kreislauf geführter, fester Wärmeträger, beispielweise Sand, aufgeheizt, der dann zum Pyrolysereaktor geführt wird und dort die Wärme auf die Biomasse überträgt.

Eine Übersicht über wichtige Schnellpyrolyseverfahren ist aus A. V. Bridgwater, Biomass and Bioenergy, Vol. 38, S. 68-94, 2012, ersichtlich. Darüber hinaus behandelt der Artikel zahlreiche Problemfelder, die bei der Schnellpyrolyse von Biomasse auftreten können, wie z. B. die Wärmeübertragung auf die Biomasse, das Abtrennen des Pyrolysekokses von den Flüchtigen und die Kondensation des Pyrolyseteers. Zur Maximierung der flüssigen Pyrolyseprodukte ist es demnach erforderlich, sehr hohe Aufheizraten der Biomasse bei kurzen, definierten Verweilzeiten, bevorzugt weniger als 2 s, im Temperaturbereich von ca. 500 °C zu realisieren. Danach muss der Pyrolysekoks schnell und möglichst vollständig von den Flüchtigen abgetrennt werden, um Sekundärreaktionen der Flüchtigen auf der Koksoberfläche sowohl im Reaktor als auch in den heißen Teilen der Anlage zu minimieren. Eine weitere prozesstechnische Aufgabe ist es dann, die flüchtigen Bestandteile möglichst schnell abzukühlen und zu kondensieren. Eine technische Realisierung von hohen Aufheizraten bei kurzen Verweilzeiten ist die Verwendung von Wirbelschichtreaktoren mit einem anorganischen Bettmaterial, wie z. B. in EP 0513051 B1 oder EP0904335 B1 beschrieben. Nachteilig daran ist insbesondere die Verwendung eines Fluidisierungsmittels, das entweder den Heizwert des Pyrolysegases stark reduziert und damit seine Nutzung einschränkt oder als ein flüssiges Produkt zusammen mit dem Pyrolysekondensat erhalten wird, wodurch dessen Nutzung eingeschränkt oder die Wärmeabfuhr bei der Kondensation unnötig erhöht wird. Weitere Nachteile einer Wirbelschicht sind auftretende Erosionen an den Reaktorbehältern durch das anorganische Bettmaterial, die axiale Rückvermischung im Reaktionsbehälter, die zu einer unvorteilhaften Verweilzeitverteilüng führt, sowie die notwendige, spezifisch definierte Teilchenform des Einsatzstoffes (K. Hertwig und L. Martens, Chemische Reaktionstechnik, Oldenbourg Wissenschaftsverlag München, 2007, S. 351 f).

Ein anderes Schnellpyrolyseverfahren beruht auf der Verwendung eines mechanisch betriebenen Pyrolysereaktors, bei dem ein heißes Wärmeübertragungsmittel mit Biomasse innig vermischt wird. Der entstehende Pyrolysekoks wird vor der Kondensationsstufe abgetrennt. Dieses Verfahren hat den Vorteil, dass mit sehr geringen Aufarbeitungsschritten eine große Vielzahl an Biomassen eingesetzt werden kann und dass die Pyrolyseprodukte unverdünnt erhalten werden können.

Der Pyrolysereaktor kann beispielsweise als Doppelschnecken-Mischreaktor ausgestaltet sein. Er umfasst dann einen Doppelschneckenreaktor mit zwei parallel zueinander angeordnet gleichsinnig drehenden und dabei ineinander greifenden Förderschnecken, in dem ein kontinuierlicher Biomassefluss mit einem kontinuierlichen Sand- oder Koksfluss als Wärmeüberträger für mehrere Sekunden auf eine Temperatur um 500 °C erhitzt wird. Reaktoren der beschriebenen Art sind seit langem bekannt und werden auch für die Pyrolyse von Raffinerierückständen verwendet, beispielsweise im Lurgi-Ruhrgas-(LR)-Verfahren, das in Ullmann's Encyclopedia of industrial Chemistry, Sixth Edition, 1998 Electronic Release, Stichwort "Direct Heating with Circulating Heat Carriers" (H.- J. Weiss) beschrieben ist. Einzelheiten zu der Durchführung des Verfahrens finden sich beispielsweise in den internationalen Patentanmeldungen WO 2003/033624 A1 und WO 2007/017005 A1 sowie den DE-Offenlegungsschriften DE 102005049375 A1 und DE 102005037917A1.

Um die Pyrolyseprodukte zu erhalten, wird zunächst im Produktgas enthaltener Koks über Heißgaszyklone staubförmig abgeschieden. Bei der nachfolgenden Quenchkühlung wird der Pyrolyseteer erhalten, der hinsichtlich seiner rheologischen Eigenschaften Schweröl ähnelt. Bei der schlagartigen Abkühlung gebildete Aerosole werden über einen Elektrofilter zurück gehalten, bevor das wässrige Kondensat bei Umgebungstemperatur erhalten wird. Es verbleibt ein brennbares Pyrolysegas, das im Wesentlichen aus Kohlendioxid und Kohlenmonoxid sowie Kohlenwasserstoffen besteht und für die Rauchgaserzeugung Verwendung finden kann.

Problematisch bei dem zuletzt beschriebenen Verfahren zur Schnellpyrolyse ist es, dass die Verweilzeit der Pyrolysedämpfe in den heißen Teilen der Anlage von deren Ausgestaltung sowie von den Pyrolysebedingungen, z. B. der Pyrolysetemperatur, und dem Durchsatz an Biomasse abhängig ist und darüber hinaus nicht definiert eingestellt werden kann. Bei An- und Abfahrbedingungen sowie beim Betrieb der Anlage im Teillastbereich erhöht sich die Verweilzeit, so dass verstärkt Sekundärreaktionen stattfinden, die den Anteil an flüssigen Produkten erniedrigen. In extremen Fällen können durch diese Reaktionen zudem schwere bis hin zu "klebrigen" Kokspartikel entstehen, die zur Sedimentation und Adhäsion neigen und Rohrleitungen blockieren können. Zur Abtrennung des Pyrolysekokses von den gasförmigen bzw. dampfförmigen Pyrolyseprodukten werden häufig, wie oben ausgeführt, Fliehkraftabscheider verwendet. Deren Abscheidegrad ist abhängig von der Gasgeschwindigkeit am Eintritt, so dass eine nahezu vollständige Abscheidung nicht über einen großen Lastbereich der Pyrolyseanlage erzielt werden kann.

### Beschreibung der Erfindung

Vor diesem Hintergrund besteht die Aufgabe der vorliegenden Erfindung darin, ein Verfahren für die Schnellpyrolyse von Biomasse zu Pyrolyseprodukten anzugeben, in dem die mittlere Verweilzeit der gasförmigen bzw. dampfförmigen Pyrolyseprodukten in den heißen Teilen der Anlage gezielt und unabhängig von dem dem Pyrolysereaktor zugeführten Biomasse-Massenstrom eingestellt und somit die Ausbeute an besonders erwünschten, flüssigen Pyrolyseprodukten gesteigert werden kann. Diese Aufgabe wird im Wesentlichen durch ein erfindungsgemäßes Verfahren mit den Merkmalen des Anspruchs 1 und durch eine erfindungsgemäße Anlage mit den Merkmalen des Anspruchs 10 gelöst:

### Erfindungsgemäßes Verfahren:

Verfahren zur Herstellung von Pyrolyseprodukten aus Biomasse, insbesondere lignocellulosehaltiger Biomasse, umfassend folgende Schritte:
a) Bereitstellen der Biomasse in förderfähiger Form,
b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
c) Inkontaktbringen der Biomasse mit dem aufgeheizten Wärmeträger in einem Pyrolysereaktor, wobei gas- und dampfförmige sowie feste Pyrolyseprodukte erhalten und aus dem Pyrolysereaktor ausgeleitet werden,
d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
e) Abkühlen der an festen Pyrolyseprodukten abgereicherten gas- und dampfförmigen Pyrolyseprodukte, wobei ein Pyrolysegas und ein Pyrolyseteer erhalten werden,
f) Abtrennen des Pyrolysegases von dem Pyrolyseteer mittels einer zweiten mechanischen Trennvorrichtung und Ausleiten des Pyrolysegases und des Pyrolyseteers aus dem Verfahren, wobei das Pyrolysegas mindestens teilweise als Brennstoff nach Verfahrensschritt b) zurückgeführt wird,
dadurch gekennzeichnet, dass mindestens ein Teil des abgekühlten Rauchgases oder des Pyrolysegases oder Mischungen beider Gase zum Pyrolysereaktor oder vor die erste mechanische Trennvorrichtung zurückgeführt werden.

### Erfindungsgemäße Anlage:

Anlage zur Herstellung von Pyrolyseprodukten aus Biomasse, insbesondere lignocellulosehaltiger Biomasse, umfassend folgende Anlagenteile:
- Fördervorrichtungen für die bereitgestellte Biomasse, den Wärmeträger und die festen Pyrolyseprodukte,
- eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
- einen Pyrolysereaktor, umfassend Mittel zum Ableiten der gas- und dampfförmigen sowie festen Pyrolyseprodukte,
- eine erste mechanische Trennvorrichtung zum Abtrennen der festen Pyrolyseprodukte von den gas- und dampfförmigen Pyrolyseprodukten,
- eine Abkühlvorrichtung zum Abkühlen der an festen Pyrolyseprodukten abgereicherten gas- und dampfförmigen Pyrolyseprodukte,
- eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers,
gekennzeichnet durch eine Rückführleitung für abgekühltes Rauchgas und/oder eine Rückführleitung für Pyrolysegas zur Rückführung mindestens eines Teils des abgekühlten Rauchgases oder des Pyrolysegases oder Mischungen beider Gase zum Pyrolysereaktor oder vor die erste mechanische Trennvorrichtung.

Weitere vorteilhafte Ausgestaltungen des erfindungsgemäßen Verfahrens und der erfindungsgemäßen Anlage finden sich in den jeweiligen Unteransprüchen.

Unter dem Bereitstellen der Biomasse in förderfähiger Form sollen alle dem Fachmann geläufigen Formen der Aufbereitung, Vorbereitung oder Konditionierung verstanden werden, die es ermöglichen, die Biomasse in einen Zustand zu verbringen, der es gestattet, sie mit gängigen Fördermethoden den einzelnen Verfahrensschritten zuzuführen und sie ferner zwischenzulagern, ohne dass dieser Zustand wesentlich negativ beeinflusst wird. Das Bereitstellen kann beispielsweise das Zerkleinern, Klassieren, Trocknen, Formgebungsschritte wie das Pelletieren sowie die Einstellung eines silofähigen Zustands umfassen.

Als mechanische Trennvorrichtungen werden grundsätzlich alle Vorrichtungen verstanden, die eine Stofftrennung aufgrund mechanischer oder elektromechanischer Einwirkungen gestatten, wie beispielsweise Filter, Elektrofilter, Zyklone, Sedimentationsvorrichtungen.

Mit dem Begriff Biomasse wird die Stoffmasse von Lebewesen oder deren Teile bzw. Körperteile bezeichnet.

Unter Inkontaktbringen in Verfahrensschritt c) des erfindungsgemäßen Verfahrens wird das Zusammenführen der Biomasse mit dem aufgeheizten Wärmeträger im Pyrolysereaktor unter intensivem Vermischen und unter den Bedingungen des intensiven, direkten Wärmetauschs durch direkte Wärmeübertragung verstanden.

Geeignete Pyrolysereaktoren sind dem Fachmann aus dem einschlägigen Stand der Technik an sich bekannt. Insbesondere werden darunter alle Reaktorsysteme verstanden, die einen Transport des Gemisches aus Biomasse und Wärmeträger durch das Reaktorinnere gestatten, wodurch eine definierte Verweilzeit dieses Gemisches bei Pyrolysebedingungen im Zeitbereich von Sekunden bis Minuten eingestellt werden kann.

Unter Pyrolysebedingungen werden physikalisch-chemische Bedingungen verstanden, die eine thermochemische Spaltung organischer Verbindungen unter weitgehend nichtoxidativen Bedingungen ermöglichen. Sie sind aus dem Stand der Technik an sich bekannt und umfassen die Einstellung hoher Temperaturen und die weitgehende Abwesenheit von Oxidationsmitteln, also beispielsweise das Erhitzen unter Luftabschluss. Die Pyrolysebedingungen wird der Fachmann in Abhängigkeit von der zu behandelnden Biomasse geeignet auswählen.

Unter Mitteln zum Ableiten der gas- und dampfförmigen sowie der festen Pyrolyseprodukte aus dem Pyrolysereaktor, Mitteln zum Ausleiten des Pyrolysegases aus dem Verfahren und zum mindestens teilweise Rückführen des Pyrolysegases sowie Mitteln zum Ausleiten des Pyrolyseteers sind alle Vorrichtungen zu verstehen, die die genannten Förderaufgaben lösen können. Insbesondere sind dies Zugangs- oder Abgangsstutzen aus den entsprechenden Apparaten oder Bereichen, Rohrleitungen und - sofern benötigt - Fördervorrichtungen wie beispielsweise Pumpen, Gebläse, Verdichter, Förderschnecken, Zellenradschleusen oder ähnliches.

Das Grundkonzept des erfindungsgemäßen Verfahrens bzw. der erfindungsgemäßen Anlage sieht vor, dem Pyrolysereaktor einen zusätzlichen, regelbaren Gasstrom zuzuführen. Die Menge des zugeführten Gasstromes wird dabei so geregelt, dass die Gesamtmenge des Gases, also die Summe aus zugeführtem Gas und dem Mengenstrom der bei der Pyrolyse gebildeten gasförmigen bzw. dampfförmigen Produkte, weitgehend konstant gehalten werden kann, unabhängig von dem Massenstrom Menge und der Art der zugeführten Biomasse. Damit kann eine konstante und optimale mittlere Gasverweilzeit im Reaktor eingestellt werden, die für die erwünschte hohe Ausbeute an flüssigen Produkten optimal ist. Zudem sind dadurch die Geschwindigkeiten in den produktgasführenden Rohrleitungen im heißen Teil der Anlage ebenfalls konstant, was eine optimale Auslegung hinsichtlich unerwünschter Sedimentationen oder Adhäsionen insbesondere in den Rohrleitungen ermöglicht. Weiterhin wird die Auslegung der nachfolgenden Prozessschritte vereinfacht und der Betriebsbereich der Anlage erhöht. Ein weiterer großer Vorteil der Erfindung beruht darauf, dass durch die erfindungsgemäße Gaszugabe insbesondere der Partialdruck der hochsiedenden Komponenten reduziert wird, so dass Kondensationen, die zu klebrigen Ablagerungen und Adhäsionen in den Rohrleitungen führen, vermieden werden können, insbesondere dann, wenn es durch Wärmeverluste zur geringen Abkühlung der Pyrolysegasen kommt. Durch die Zuführung des Gasstromes, der entweder aus dem Rauchgasstrom der Wärmeträgeraufheizung stammt oder aus dem Pyrolysegasstrom, können darin enthaltene reaktive Spezies (z. B. H₂, CO, CH₄, C₂H₆, C₂H₄, H₂O) zudem die Produktverteilung positiv beeinflussen. Wenn das erfindungsgemäße Verfahren so durchgeführt wird, dass die Rauchgase zum Pyrolysereaktor zurückgeführt werden, ist darauf zu achten, dass der rückgeführte Rauchgasstrom durch eine entsprechende Verfahrensführung der Verbrennung weitgehend sauerstofffrei ist, um unerwünschte Oxidationsreaktionen bei der Pyrolyse zu vermeiden.

### Bevorzugte Ausgestaltungen der Erfindung

Eine bevorzugte Ausgestaltung des erfindungsgemäßen Verfahrens ist dadurch gekennzeichnet, dass die Rückführung der Gase mengengeregelt und in Abhängigkeit von der dem Pyrolysereaktor zugeführte Biomasse-Massenstrom erfolgt. Vorteilhaft ist hierbei, dass auf diese Weise unabhängig von dem zugeführten Massenstrom an Biomasse die Verweilzeit der Pyrolysegase im heißen Teil der Anlage so gesteuert werden kann, dass eine weitgehend konstante Verweilzeit bei einer definierten Pyrolysetemperatur und eine weitgehend konstante Strömungsgeschwindigkeit erzielt werden können, ohne dass die Nachteile einer Wirbelschichtpyrolyse auftreten. Dies ermöglicht einen größeren Lastbereich der Anlage, eine vereinfachte Auslegung sowie ein größeres Einsatzspektrum an Biomassen.

Vorteilhaft ist es, wenn die rückgeführten Gase vor der Rückführung aufgeheizt werden, da die Temperaturen sowohl des Rauchgases als auch des Pyrolysegases aufgrund der durchlaufenen Reinigungsschritte signifikant unter der Pyrolysetemperatur liegen. Auf diese Weise können Wärmeverluste im Pyrolysereaktor vermieden werden.

Eine vorteilhafte Ausgestaltung des erfindungsgemäßen Verfahrens sieht vor, dass die rückgeführten Gase vor den Reaktoreingang des Pyrolysereaktors zurückgeführt und dem Pyrolysereaktor gemeinsam mit der Biomasse oder dem Wärmeträger aufgegeben werden. Auf diese Weise macht sich die Einstellung des Gasdurchsatzes über die gesamte Reaktorlänge bemerkbar. Gerade in der Nähe des Reaktoreinganges, wo die Biomasse noch wenig umgesetzt wurde und der Massenstrom der gas- und dampfförmigen Pyrolyseprodukte folglich noch klein ist, können sich unerwünschte Folgereaktionen durch eine zu lange Verweilzeit in diesem besonders heißen Teil des Pyrolysereaktor bemerkbar machen.

In alternativer Ausgestaltung des erfindungsgemäßen Verfahrens werden die zurückgeführten Gase an einer beliebigen Stelle entlang der Längsachse des Pyrolysereaktors diesem aufgegeben. Dabei ist es vorteilhaft, dass - insbesondere bei entsprechender Vorheizung des rückgeführten Gases - ein zusätzlicher Wärmeeintrag in den Pyrolysereaktor an einer Stelle erfolgen kann, an der der Wärmeträger bereits signifikant abgekühlt ist, wodurch die Pyrolysereaktion gefördert wird.

Es kann auch erwogen werden, einen Teil der zurückgeführten Gase am Reaktoreingang und einen weiteren Teil an einer weiteren Stelle entlang der Längsachse des Pyrolysereaktors zuzugeben. Auf diese Weise können die Vorteile der beiden vorstehend erörterten Ausgestaltungen kombiniert werden.

Eine weitere vorteilhafte Ausgestaltung des erfindungsgemäßen Verfahrens sieht vor, dass die rückgeführten Gase mit den gas- und dampfförmigen Pyrolyseprodukten stromabwärts von dem Pyrolysereaktor und stromaufwärts von der ersten mechanischen Trennvorrichtung vermischt werden. Diese Ausgestaltung ist dann vorteilhaft einsetzbar, wenn die Umsetzung innerhalb des Pyrolysereaktors nicht beeinflusst werden soll, sonders es das primäre Ziel ist, nachteilige Folgen, wie beispielsweise Sedimentation oder Adhäsion von Feststoffen in den dem Pyrolysereaktor nachgeschalteten Leitungen, zu verhindern.

Als besonders vorteilhaft hat es sich herausgestellt, wenn der Massenstrom der rückgeführten Gase so geregelt wird, dass die mittlere Verweilzeit der Gasphase im Pyrolysereaktor zwischen 0,1 bis 10 s, bevorzugt zwischen 0,5 bis 5 s, meist bevorzugt zwischen 1 und 3 s beträgt, wenn die Temperatur im Pyrolysereaktor zwischen 450 und 550 °C liegt. In diesen bevorzugten Verweilzeitbereichen werden besonders hohe Ausbeuten der erwünschten flüssigen Pyrolyseprodukte erhalten.

In Weiterbildung der Erfindung wird ein Teil des Pyrolyseteers aus dem Verfahren ausgeleitet und mit festen Pyrolyseprodukten zu einer Suspension vermischt, die als Einsatzstoff in einer nachgeschalteten Vergasungsstufe verwendet wird, in der ein Wasserstoff und Kohlenoxide enthaltendes Synthesegas als Produkt erhalten wird. Auf diese Weise wird die Biomasse letztlich in ein wertvolles, als Chemierohstoff oder umweltfreundlicher Brennstoff einsetzbares Produkt überführt.

In bevorzugter Ausgestaltung des erfindungsgemäßen Verfahrens ist der Pyrolysereaktor als Schneckenextruder ausgestaltet. Hierdurch wird einerseits der Transport des Gemisches aus Biomasse und Wärmeträger und somit das Einstellen einer definierten Verweilzeit unter Pyrolysebedingungen ermöglicht. Andererseits erfolgt bei dem Transport eine intensive Durchmischung der Gemischkomponenten, die den Wärmeübergang von dem Wärmeträger auf die Biomasse stark erhöht. Dabei hat es sich als günstig erwiesen, wenn als Wärmeträger Sand verwendet wird. Sand ist chemisch weitgehend inert und katalysiert keine unerwünschten Nebenreaktionen. Er weist gute Wärmerträgereigenschaften, eine hohe mechanische und thermische Stabilität sowie einen hohen Schmelzpunkt auf und ist preisgünstig im Handel erhältlich.

In einem weiteren Aspekt der Erfindung umfasst die Anlage eine Regelvorrichtung zur mengengeregelten Rückführung der Gase in Abhängigkeit von dem dem Pyrolysereaktor zugeführten Biomasse-Massenstrom. Vorteilhaft ist hierbei, dass auf diese Weise unabhängig von dem zugeführten Massenstrom an Biomasse die Verweilzeit der Pyrolysegase im heißen Teil der Anlage so gesteuert werden kann, dass eine weitgehend konstante Verweilzeit bei einer definierten Pyrolysetemperatur und eine weitgehend konstante Strömungsgeschwindigkeit erzielt werden können, ohne dass die Nachteile einer Wirbelschichtpyrolyse auftreten. Dies ermöglicht einen größeren Lastbereich der Anlage, eine vereinfachte Auslegung sowie ein größeres Einsatzspektrum an Biomassen.

Als besonders vorteilhaft hat es sich herausgestellt, wenn die erfindungsgemäße Anlage auch Aufheizvorrichtungen für das rückgeführte abgekühlte Rauchgas oder das rückgeführte Pyrolysegas oder beide umfasst. Dies ist vorteilhaft, da die Temperaturen sowohl des Rauchgases als auch des Pyrolysegases aufgrund der durchlaufenen Reinigungsschritte signifikant unter der Pyrolysetemperatur liegen. Auf diese Weise können Wärmeverluste im Pyrolysereaktor vermieden werden.

Vorteilhaft ist es ferner, wenn die erfindungsgemäße Anlage eine Abzugsleitung zum Ausleiten eines Teils des Pyrolyseteers aus dem Kühlmittelkreislauf umfasst, so dass der Pyrolyseteer als Produkt auf einfache Weise gewonnen werden kann.

In Weiterbildung der Erfindung umfasst die Anlage auch eine Mischvorrichtung zum Mischen des ausgeleiteten Teils des als zweites Kühlmittel verwendeten Pyrolyseteers mit festen Pyrolyseprodukten zu einer Suspension und eine Vergasungsvorrichtung zum Vergasen der Suspension in ein Wasserstoff und Kohlenoxide enthaltendes Synthesegasprodukt. Durch diese Weiterbildung der erfindungsgemäßen Anlage wird die Biomasse letztlich in ein wertvolles, als Chemierohstoff oder umweltfreundlicher Brennstoff einsetzbares Produkt überführt.

### Ausführungs- und Zahlenbeispiel

Weitere Merkmale, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen
- Fig. 1: ein Fließschema einer ersten Ausgestaltung des erfindungsgemäßen Verfahrens bzw. der erfindungsgemäßen Anlage,
- Fig. 2: ein Fließschema einer zweiten Ausgestaltung des erfindungsgemäßen Verfahrens bzw. der erfindungsgemäßen Anlage,
- Fig. 3: ein Fließschema einer dritten Ausgestaltung des erfindungsgemäßen Verfahrens bzw. der erfindungsgemäßen Anlage,
- Fig. 4: ein Fließschema einer vierten Ausgestaltung des erfindungsgemäßen Verfahrens bzw. der erfindungsgemäßen Anlage,

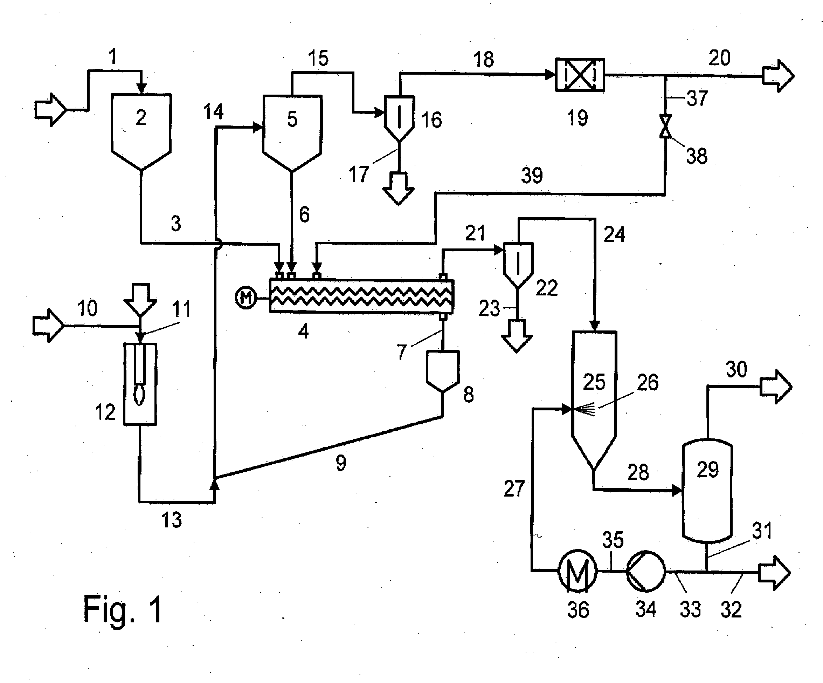

In der in Fig. 1 schematisch dargestellten Ausgestaltung des erfindungsgemäßen Verfahrens bzw. der erfindungsgemäßen Anlage wird über Leitung 1 Biomasse in förderfähiger Form in das Silo 2 gefördert und dort zwischengelagert. Rohstoff des Verfahrens kann prinzipiell jede Art trockener, insbesondere lignocellulosehaltiger Biomasse sein, die durch Nutzung von Reststoffen aus der Agrar- und Forstwirtschaft sowie der Landschaftspflege anfällt. Im vorliegenden Ausführungsbeispiel wird getrocknetes und zerkleinertes Stroh als Biomasse eingesetzt.

Aus dem Silo 2 wird die Biomasse über Leitung 3 unter Verwendung bildlich nicht dargestellter Förder-, Dosierungs- und ggf. Zwischenlagerungsvorrichtungen dem Pyrolysereaktor 4 aufgegeben. Bei diesem handelt es sich um einen an sich bekannten Doppelschneckenreaktor mit zwei parallel zueinander angeordnet gleichsinnig drehenden und dabei ineinander greifenden Förderschnecken. Durch diesen Reaktoraufbau wird ein kontinuierlicher Biomassefluss durch den Reaktor und somit definierte Verweilzeiten von wenigen Sekunden, typischerweise zwischen 0,1 und 10 s, bei Pyrolysebedingungen gewährleistet. Gleichzeitig erfolgt eine intensive Vermischung der Biomasse mit dem als Wärmeträger verwendeten, vorerhitzten Sand, der aus einem Vorratsbehälter 5 entnommen und über Leitung 6 dem Pyrolysereaktor 4 aufgegeben wird. Hierdurch stellt sich eine Pyrolysetemperatur von ca. 500 °C ein.

Nach Durchlaufen des Pyrolysereaktors 4 wird ein Teil der festen Reaktionsprodukte (Pyrolysekoks) sowie der abgekühlte Wärmeträger über Leitung 7 unter Verwendung bildlich nicht dargestellter Fördervorrichtungen aus dem Pyrolysereaktor ausgeleitet, in dem Zwischenbehälter 8 gelagert und über Leitung 9 weitergeführt. Über Leitungen 10 und 11 werden ein gasförmiger Brennstoff und Verbrennungsluft zum Brenner 12 geführt und dort verbrannt. Als gasförmiger Brennstoff wird rückgeführtes Pyrolysegas und/oder Erdgas verwendet. Das dabei erzeugte Rauchgas wird über Leitung 13 aus dem Brenner ausgeleitet und mit den über Leitung 9 herangeführten Feststoffen vereinigt. Hierdurch erfolgt die Wiederaufheizung des Wärmeträgers sowie sein pneumatischer Transport über Leitung 14 zurück in den Vorratsbehälter 5, wodurch er für einen erneuten Einsatz im Pyrolysereaktor zur Verfügung steht.

Über Leitung 15 wird das teilweise abgekühlte Rauchgas aus dem Vorratsbehälter 5 ausgeleitet. Es enthält noch einen signifikanten Anteil an Feststoffen, insbesondere Pyrolysekoks. Die Feststoffe werden im Zyklon 16 abgeschieden und über Leitung 17 der bildlich nicht dargestellten Koksaufbereitung zugeführt. Über Leitung 18 wird das teilweise von Feststoffanteilen befreite Rauchgas einem Filter 19 zugeführt, in dem eine weitere Feststoffabscheidung erfolgt. Über Leitung 20 wird das weitgehend von Feststoffen befreite Rauchgas der Abgasentsorgung zugeführt.

Über Leitung 21 werden die gas- und dampfförmigen Pyrolyseprodukte aus dem Pyrolysereaktor ausgeleitet und einem Zyklon 22 zugeführt. In diesem erfolgt eine Abtrennung mitgerissener Feststoffe, insbesondere von Pyrolysekoks, der über Leitung 23 der bildlich nicht dargestellten Koksaufbereitung zugeführt wird. Über Leitung 24 werden die teilweise von Feststoffen befreiten gas- und dampfförmigen Pyrolyseprodukte der Abkühlvorrichtung 25 zugeführt, die als Quench ausgestaltet ist. Da seit dem Verlassen des Pyrolysereaktors noch keine signifikante Abkühlung erfolgte, beträgt die Eintrittstemperatur der gas- und dampfförmigen Pyrolyseprodukte in die Abkühlvorrichtung immer noch rund 500 °C.

In der Abkühlvorrichtung erfolgt in eine Abkühlung im direkten Wärmetausch gegen Pyrolyseteer als Kühlmittel, der eine Temperatur von rund 90 °C aufweist, über Leitung 27 der Abkühlvorrichtung zugeführt und ebenfalls über eine geeignete Verteilungsvorrichtung 26 aufgegeben wird. Durch die Abkühlung erfolgt eine Kondensation der dampfförmigen Pyrolyseprodukte und es scheidet sich der Pyrolyseteer ab, der noch einen geringen Feststoffanteil enthält. Der Pyrolyseteer und die verbliebenen gasförmigen Pyrolyseprodukte, das Pyrolysegas, verlassen über Leitung 28 mit einer Temperatur von 106 °C die Abkühlvorrichtung und werden in eine Phasentrennvorrichtung 29 eingeleitet. In dieser erfolgt die Trennung des Pyrolyseteers von dem Pyrolysegas, das über Leitung 30 ausgeleitet und über Leitung 10 mindestens teilweise als gasförmiger Brennstoff zum Brenner 12 zurückgeführt wird. Da das Pyrolysegas noch eine erhebliche Menge an Wasser enthalten kann, wird es vor der Rückführung zum Brenner optional einer weiteren, nicht bildlich dargestellten Phasentrennvorrichtung zugeführt, in der Wasser abgetrennt wird.

Der noch einen geringen Feststoffanteil enthaltende Pyrolyseteer wird über Leitung 31 aus der Phasentrennvorrichtung 29 abgeführt und teilweise über Leitung 32 als Flüssigprodukt aus dem Verfahren ausgeleitet. Ein anderer Anteil des Pyrolyseteers wird mittels einer Pumpe 34 über Leitungen 33 und 35 einem Wärmetauscher 36 zugeführt, dort auf eine Temperatur von rund 90 °C abgekühlt und anschließend über Leitung 27 zu der Abkühlvorrichtung als Kühlmittel zurückgeführt.

Erfindungsgemäß wird ein Teil des über Leitung 20 aus dem Verfahren ausgeleiteten Rauchgases über Leitung 37 abgezogen und über Regelventil 38 und Leitung 39 zum Pyrolysereaktor zurückgeführt und diesem über einen Eintrittsstutzen aufgegeben. Die Regelung des Massenstroms des rückgeführten Rauchgases erfolgt in Abhängigkeit von dem dem Pyrolysereaktor zugeführten Biomasse-Massenstrom. Ziel ist es dabei, die Verweilzeit der Gase im Pyrolysereaktor so einzustellen, dass eine optimale Ausbeute an Flüssigprodukten erhalten wird.

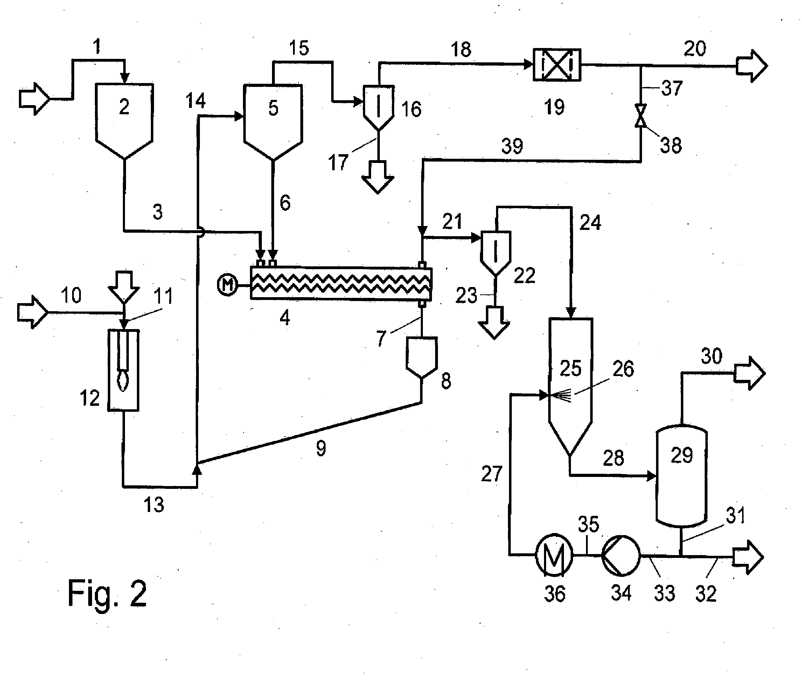

Als Unterschied zu der vorstehend erörterten Ausgestaltung ergibt sich bei der in Fig. 2 schematisch dargestellten Ausgestaltung des erfindungsgemäßen Verfahrens bzw. der erfindungsgemäßen Anlage, dass nunmehr die Zugabe des rückgeführten Rauchgases vor die erste mechanische Trennvorrichtung, also stromabwärts von dem Pyrolysereaktor und stromaufwärts von der ersten mechanischen Trennvorrichtung durch Zugabe in die Leitung 21 erfolgt. Wieder erfolgt die Regelung des Massenstroms des rückgeführten Rauchgases erfolgt in Abhängigkeit von dem dem Pyrolysereaktor zugeführten Biomasse-Massenstrom. Diese Ausgestaltung ist dann vorteilhaft einsetzbar, wenn die Umsetzung innerhalb des Pyrolysereaktors nicht beeinflusst werden soll, sonders es das primäre Ziel ist, nachteilige Folgen, wie beispielsweise Sedimentation oder Adhäsion von Feststoffen in den dem Pyrolysereaktor nachgeschalteten Leitungen, zu verhindern.

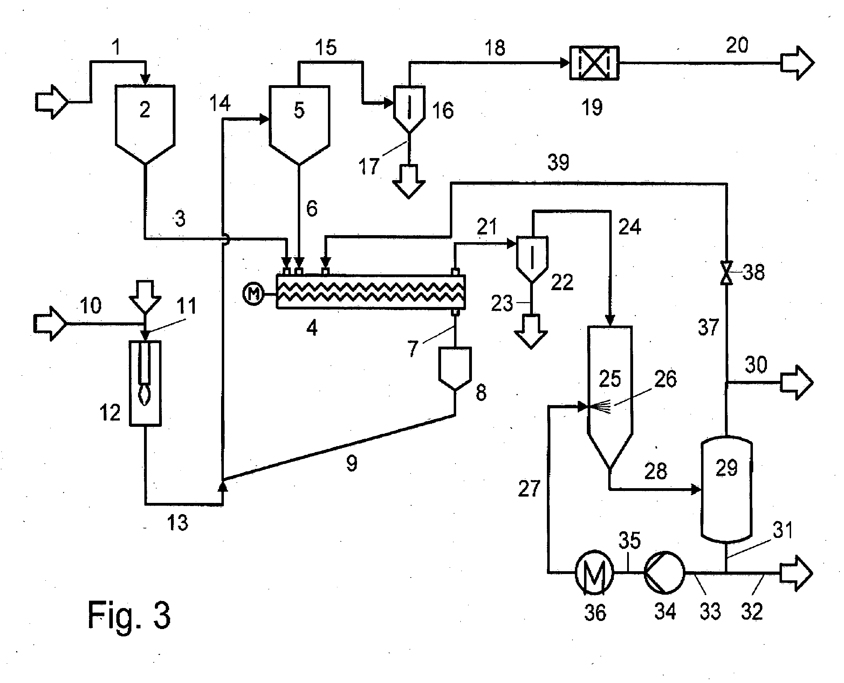

Bei der in Fig. 3 schematisch dargestellten Ausgestaltung des erfindungsgemäßen Verfahrens bzw. der erfindungsgemäßen Anlage erfolgt wieder eine Gasrückführung zum Pyrolysereaktor, allerdings wird in diesem Ausführungsbeispiel Pyrolysegas zurückgeführt, das über Leitung 37 abgezogen und über Regelventil 38 und Leitung 39 zum Pyrolysereaktor zurückgeführt und diesem über einen Eintrittsstutzen aufgegeben wird. Die Regelung des Massenstroms des rückgeführten Rauchgases erfolgt wiederum in Abhängigkeit von dem dem Pyrolysereaktor zugeführten Biomasse-Massenstrom.

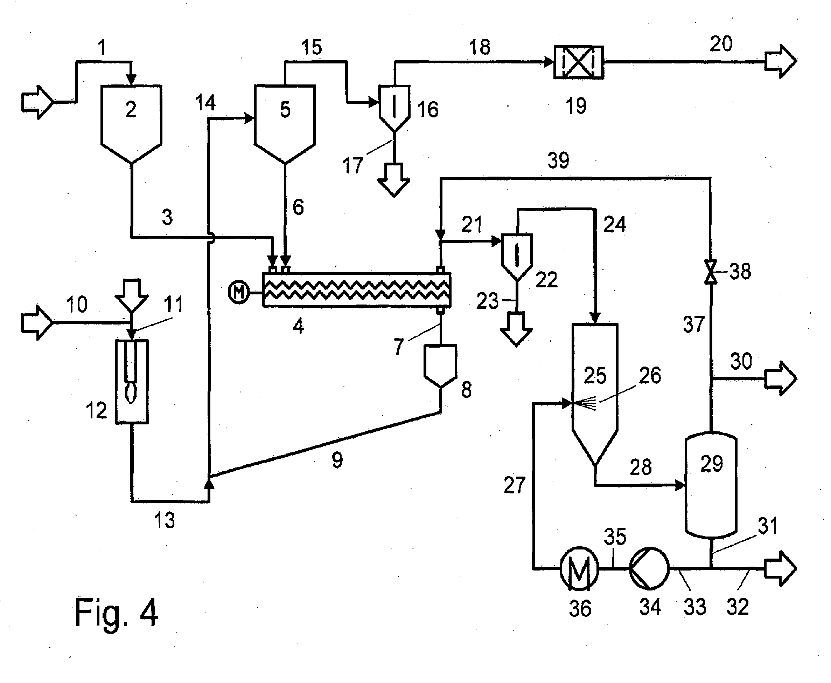

Schließlich erfolgt bei der in Fig. 4 schematisch dargestellten Ausgestaltung des erfindungsgemäßen Verfahrens bzw. der erfindungsgemäßen Anlage die Zugabe des rückgeführten Rauchgases vor die erste mechanische Trennvorrichtung, also stromabwärts von dem Pyrolysereaktor und stromaufwärts von der ersten mechanischen Trennvorrichtung durch Zugabe in die Leitung 21. Wieder erfolgt die Regelung des Massenstroms des rückgeführten Rauchgases erfolgt in Abhängigkeit von dem dem Pyrolysereaktor zugeführten Biomasse-Massenstrom. Die Vorteile dieser Art der Gasrückführung entsprechen denen, die oben im Fall des Ausführungsbeispiels der Fig. 2 diskutiert wurden.

In allen diskutierten Ausführungsbeispielen erfolgt vor der Zugabe des rückgeführten Gases in den Gasweg der gasförmigen oder dampfförmigen Pyrolyseprodukte eine bildlich nicht dargestellte Aufheizung. Auf diese Weise werden unerwünschte Wärmeverluste vermieden.

### Zahlenbeispiel

In der nachfolgenden Tabelle werden die Anteile erhaltenen Pyrolyseteers an den gesamten Pyrolyseprodukten in Abhängigkeit von der Pyrolysetemperatur und der mittleren Verweilzeit der Gasphase im Pyrolysereaktor miteinander verglichen. Der Anteil bzw. die Selektivität an Pyrolyseteer wird in Gew.-% auf trockener und aschefreier Basis wiedergegeben.

Es ist zu erkennen, dass insbesondere innerhalb der ersten drei Sekunden eine signifikante Abhängigkeit des Anteils erhaltenen Pyrolyseteers von der mittleren Verweilzeit der Gasphase im Pyrolysereaktor gegeben ist.

**Tabelle: Anteile erhaltenen. Pyrolyseteers an den gesamten Pyrolyseprodukten in Abhängigkeit von der Pyrolysetemperatur und der Verweilzeit der Gasphase im Pyrolysereaktor**

| **Verweitzeits** | **Gew.-% Pyrolyseteer bei 500 °C** | **Gew.-% Pyrolyseteer bei 550 °C** |
|---|---|---|
| 1 | 60,4 | 56,7 |
| 2 | 59,2 | 54,4 |
| 3 | 58,5 | 53,7 |
| 6 | 57,8 | 52,2 |

### Gewerbliche Anwendbarkeit

Mit der Erfindung wird eine Verbesserung eines Schnellpyrolyseverfahrens zur Verfügung gestellt, die es ermöglicht, auch bei variierendem Massenstrom des Biomasse-Edukts die Verweilzeit der gasförmigen oder dampfförmigen Pyrolyseprodukte im Pyrolysereaktor oder in den sich stromabwärts anschließenden, heißen Anlagenteilen einzustellen. Dies führt einerseits zu einer gesteigerten Ausbeute der erwünschten, flüssigen Pyrolyseprodukte. Andererseits werden auf diese Weise unerwünschte Sedimentationen oder Adhäsionen insbesondere in den Rohrleitungen vermindert. Insgesamt resultiert daher ein technisch und ökonomisch verbesserter Anlagenbetrieb der Pyrolyseanlage.

### Bezugszeichenliste

- 1: Leitung
- 2: Silo
- 3: Leitung
- 4: Pyrolysereaktor
- 5: Vorratsbehälter
- 6: Leitung
- 7: Leitung
- 8: Zwischenbehälter
- 9: Leitung
- 10: Leitung
- 11: Leitung
- 12: Brenner
- 13: Leitung
- 14: Leitung
- 15: Leitung
- 16: Zyklon
- 17: Leitung
- 18: Leitung
- 19: Filter
- 20: Leitung
- 21: Leitung
- 22: Zyklon
- 23: Leitung
- 24: Leitung
- 25: Abkühlvorrichtung
- 26: Verteilungsvorrichtung
- 27: Leitung
- 28: Leitung
- 29: Phasentrennvorrichtung
- 30: Leitung
- 31: Leitung
- 32: Leitung
- 33: Leitung
- 34: Pumpe
- 35: Leitung
- 36: Wärmetauscher
- 37: Leitung
- 38: Regelventil
- 39: Leitung

## Patentansprüche

1. Verfahren zur Herstellung von Pyrolyseprodukten aus Biomasse, insbesondere lignocellulosehaltiger Biomasse, umfassend folgende Schritte:
a) Bereitstellen der Biomasse in förderfähiger Form,
b) Aufheizen eines Wärmeträgers in einer Heizvorrichtung in direktem Wärmetausch gegen ein heißes Rauchgas, das durch Verbrennen eines oder mehrerer Brennstoffe mit einem sauerstoffhaltigen Oxidationsmittel erzeugt wird, Ausleiten des aufgeheizten Wärmeträgers und des abgekühlten Rauchgases aus der Heizvorrichtung,
c) Inkontaktbringen der Biomasse mit dem aufgeheizten Wärmeträger in einem Pyrolysereaktor, wobei gas- und dampfförmige sowie feste Pyrolyseprodukte erhalten und aus dem Pyrolysereaktor ausgeleitet werden,
d) Abtrennen der festen Pyrolyseprodukte von den gas- und dampfförmigen Pyrolyseprodukten mittels einer ersten mechanischen Trennvorrichtung und Ausleiten der festen Pyrolyseprodukte aus dem Verfahren,
e) Abkühlen der an festen Pyrolyseprodukten abgereicherten gas- und dampfförmigen Pyrolyseprodukte, wobei ein Pyrolysegas und ein Pyrolyseteer erhalten werden,
f) Abtrennen des Pyrolysegases von dem Pyrolyseteer mittels einer zweiten mechanischen Trennvorrichtung und Ausleiten des Pyrolysegases und des Pyrolyseteers aus dem Verfahren, wobei das Pyrolysegas mindestens teilweise als Brennstoff nach Verfahrensschritt b) zurückgeführt wird,
**dadurch gekennzeichnet, dass** mindestens ein Teil des abgekühlten Rauchgases oder des Pyrolysegases oder Mischungen beider Gase zum Pyrolysereaktor oder vor die erste mechanische Trennvorrichtung zurückgeführt werden.

2. Verfahren nach Anspruch 1, **dadurch gekennzeichnet, dass** die Rückführung der Gase mengengeregelt und in Abhängigkeit von dem dem Pyrolysereaktor zungeführten Biomasse-Massenstrom erfolgt.

3. Verfahren nach Anspruch 1, **dadurch gekennzeichnet, dass** die rückgeführten Gase vor der Rückführung aufgeheizt werden.

4. Verfahren nach Anspruch 1, **dadurch gekennzeichnet, dass** die rückgeführten Gase vor den Reaktoreingang des Pyrolysereaktors zurückgeführt und dem Pyrolysereaktor gemeinsam mit der Biomasse oder dem Wärmeträger aufgegeben werden.

5. Verfahren nach Anspruch 1, **dadurch gekennzeichnet, dass** die zurückgeführten Gase an einer beliebigen Stelle entlang der Längsachse des Pyrolysereaktors diesem aufgegeben werden.

6. Verfahren nach Anspruch 1, **dadurch gekennzeichnet, dass** die rückgeführten Gase mit den gas- und dampfförmigen Pyrolyseprodukten stromabwärts von dem Pyrolysereaktor und stromaufwärts von der ersten mechanischen Trennvorrichtung vermischt werden.

7. Verfahren nach Anspruch 1, **dadurch gekennzeichnet, dass** der Massenstrom der rückgeführten Gase so geregelt wird, dass die mittlere Verweilzeit der Gasphase im Pyrolysereaktor zwischen 0,1 bis 10 s, bevorzugt zwischen 0,5 bis 5 s, meist bevorzugt zwischen 1 und 3 s beträgt, wenn die Temperatur im Pyrolysereaktor zwischen 450 und 550 °C liegt.

8. Verfahren nach einem der vorigen Ansprüche, **dadurch gekennzeichnet, dass** ein Teil des Pyrolyseteers aus dem Verfahren ausgeleitet und mit festen Pyrolyseprodukten zu einer Suspension vermischt wird, die als Einsatzstoff in einer nachgeschalteten Vergasungsstufe verwendet wird, in der ein Wasserstoff und Kohlenoxide enthaltendes Synthesegas als Produkt erhalten wird.

9. Verfahren nach einem der vorigen Ansprüche, **dadurch gekennzeichnet, dass** der Pyrolysereaktor als Schneckenextruder ausgestaltet ist und dass als Wärmeträger Sand verwendet wird.

10. Anlage zur Herstellung von Pyrolyseprodukten aus Biomasse, insbesondere lignocellulosehaltiger Biomasse, umfassend folgende Anlagenteile:
- Fördervorrichtungen für die bereitgestellte Biomasse, den Wärmeträger und die festen Pyrolyseprodukte,
- eine Heizvorrichtung zum Aufheizen eines Wärmeträgers in direktem Wärmetausch gegen ein heißes Rauchgas, umfassend Mittel zum Zuleiten des kalten Wärmeträgers, zum Ableiten des aufgeheizten Wärmeträgers, zum Zuleiten sauerstoffhaltigen Oxidationsmittels und eines oder mehrerer Brennstoffe und zum Ableiten eines abgekühlten Rauchgases,
- einen Pyrolysereaktor, umfassend Mittel zum Ableiten der gas- und dampfförmigen sowie festen Pyrolyseprodukte,
- eine erste mechanische Trennvorrichtung zum Abtrennen der festen Pyrolyseprodukte von den gas- und dampfförmigen Pyrolyseprodukten,
- eine Abkühlvorrichtung zum Abkühlen der an festen Pyrolyseprodukten abgereicherten gas- und dampfförmigen Pyrolyseprodukte,
- eine zweite mechanische Trennvorrichtung zum Abtrennen des Pyrolysegases von dem Pyrolyseteer, umfassend Mittel zum Ausleiten des Pyrolysegases aus dem Verfahren und zum mindestens teilweise Rückführen des Pyrolysegases als Brennstoff nach Verfahrensschritt b), sowie Mittel zum Ausleiten des Pyrolyseteers,
**gekennzeichnet durch** eine Rückführleitung für abgekühltes Rauchgas und/oder eine Rückführleitung für Pyrolysegas zur Rückführung mindestens eines Teils des abgekühlten Rauchgases oder des Pyrolysegases oder Mischungen beider Gase zum Pyrolysereaktor oder vor die erste mechanische Trennvorrichtung.

11. Anlage nach Anspruch 10, ferner umfassend eine Regelvorrichtung zur mengengeregelten Rückführung der Gase in Abhängigkeit von dem dem Pyrolysereaktor zugeführten Biomasse-Massenstrom.

12. Anlage nach Anspruch 10 oder 11, ferner umfassend Aufheizvorrichtungen für das rückgeführte abgekühlte Rauchgas oder das rückgeführte Pyrolysegas oder beide.

13. Anlage nach einem der vorigen Ansprüche, ferner umfassend eine Abzugsleitung zum Ausleiten eines Teils des Pyrolyseteers aus dem Kühlmittelkreislauf.

14. Anlage nach einem der vorigen Ansprüche, ferner umfassend eine Mischvorrichtung zum Mischen des ausgeleiteten Teils des als zweites Kühlmittel verwendeten Pyrolyseteers mit festen Pyrolyseprodukten zu einer Suspension.

15. Anlage nach einem der vorigen Ansprüche, ferner umfassend eine Vergasungsvorrichtung zum Vergasen der Suspension in ein Wasserstoff und Kohlenoxide enthaltendes Synthesegasprodukt.
